Europäisches Patentamt

European Patent Office

Office européen des brevets

(19)

(11) Publication number: **0 039 214**
**B1**

# EUROPEAN PATENT SPECIFICATION

(12)

(45) Date of publication of patent specification: 20.06.84

(51) Int. Cl.³: **H 01 G 4/18**

(21) Application number: **81301808.2**

(22) Date of filing: **23.04.81**

(54) Dielectric film and capacitor incorporating said film.

(30) Priority: 24.04.80 JP 54998/80
19.05.80 JP 66312/80

(43) Date of publication of application:
04.11.81 Bulletin 81/44

(45) Publication of the grant of the patent:
20.06.84 Bulletin 84/25

(84) Designated Contracting States:
DE FR GB IT NL

(56) References cited:
GB - A - 1 282 783
US - A - 4 173 033

(73) Proprietor: KUREHA KAGAKU KOGYO KABUSHIKI
KAISHA
9-11 Horidome-cho 1-chome Nihonbashi Chuo-ku
Tokyo (JP)

(72) Inventor: Sasaki, Tohru
1-86 Kanekodaira
Azumada-machi Iwaki-shi Fukushima-ken (JP)
Inventor: Ohta, Mitsuru
7-6 Furukawa-ken
Nishiki-machi Iwaki-shi Fukushima-ken (JP)
Inventor: Terasaki, Syuuzi
1-9 Kanekodaira
Azumada-machi Iwaki-shi Fukushima-ken (JP)
Inventor: Kakizaki, Syozo
55-1 Sekishita
Nishiki-machi Iwaki-shi Fukushima-ken (JP)
Inventor: Munakata, Hideo
154-3 Harada
Nishiki-machi Iwaki-shi Fukushima-ken (JP)

(74) Representative: Myerscough, Philip Boyd et al,
J.A.Kemp & Co. 14, South Square Gray's Inn
London, WC1R 5EU (GB)

Courier Press, Leamington Spa, England.

## Description

The present invention relates to a dielectric film which incorporates a vinylidene fluoride polymer and which has been stretched in at least one direction, and to capacitors having at least one layer of such a film.

In view of the recent requirement for the miniaturisation of capacitors of high performance, capacitors in which a plastics film is partially or wholly used as the layer of dielectric material have been employed in place of the widely used so-called paper capacitors in which sheets of insulating paper are used as the layer of dielectric material. Capacitors in which a plastics film is used as the layer of dielectric material have a lower dielectric constant than those in which insulating paper is used, but possess an extremely high dielectric breakdown voltage and a high insulation resistance. Also, the plastics film can be made thinner. Accordingly, adoption of a plastics film greatly contributes to the miniaturisation of capacitors of high performance.

Plastics films of a vinylidene fluoride polymer have been utilised as the dielectric material for small oil-impregnated DC capacitors which have a high capacitance and are usable at a high voltage.

It is well known e.g. from GB—A—1282783 that a stretched film formed by moulding a vinylidene fluoride polymer has certain electrical properties, for example a high dielectric constant and a high piezoelectric constant, which are not exhibited by other plastics films. Consequently stretched films of a vinylidene fluoride polymer have been employed in capacitors and piezoelectric elements in electronic apparatus. The dielectric constant of a stretched film of a vinylidene fluoride polymer is 3 to 5 times higher than that of other plastics films. It is therefore suitable as a dielectric material for capacitors and, when employed as a dielectric material for capacity switches, it can improve the sensitivity of the switches.

On the other hand, a stretched film of a vinylidene fluoride polymer has a large dielectric tangent (tan $\delta$), and a small volume resistivity. This can cause a large loss rate and a low insulating resistivity in capacitors in which such a film is used. Where a condenser incorporating a stretched film of a vinylidene fluoride polymer is used for, for example, a high frequency current, its dielectric loss can be extremely large and so the field of application of such stretched films is restricted.

Also, the impregnation of an impregnating agent, for example an insulating oil, into a plastics film is inferior to the impregnation of such an agent into insulating paper. This causes a deterioration of the performance of a capacitor incorporating a plastics film and can lead to breakdown accidents for such a capacitor. These demerits are inevitable for conventional films of a vinylidene fluoride polymer. As a result of the poor impregnation of the impregnating agent into such a film, as for other plastics films, many parts of the capacitor element are not impregnated with the impregnating agent. These parts cause the deterioration of the film by corona discharge under a high voltage, thus resulting in insulation breakdown in the capacitor. The inability of an impregnating agent to impregnate a conventional film of a vinylidene fluoride polymer is caused by the physical and chemical properties of the surface of the film, especially its flatness and smoothness, which considerably reduce the ability of the film to be wetted by the impregnating agent.

It has now been found that the problems mentioned above can be overcome by employing a stretched dielectric film of a vinylidene fluoride polymer together with a polycarbonate and/or a thermoplastic polyester. Accordingly, the present invention provides a dielectric film which incorporates a vinylidene fluoride polymer and which has been stretched in at least one direction, wherein said film comprises from 0.1 to (300/7) parts by weight of a polycarbonate and/or a thermoplastic polyester per 100 parts by weight of vinylidene fluoride polymer. The invention also provides capacitors having one or more layers of this dielectric film.

The term "film" is used here in a broad sense and includes sheets and strips. A "vinylidene fluoride polymer" is defined herein to mean not only a homopolymer of vinylidene fluoride but also a copolymer of vinylidene fluoride and one or more comonomers copolymerisable with vinylidene fluoride. Preferably, the copolymer contains more than 50 mole% of vinylidene fluoride units.

US—A—4173033 describes a copolymer which consists essentially of vinylidene fluoride and trifluoroethylene.·

The present invention can thus provide capacitors which contain as a dielectric, in addition to the contribution provided by any insulating oil or any other dielectric film, at least one layer of a dielectric film of the invention. This results in the capacitor being excellent in resisting high voltages and having a high insulation resistance. The capacitors can also be readily impregnated with an insulating oil because of the very fine rough surface of the dielectric film.

In its natural state a vinylidene fluoride polymer is highly crystalline and is not compatible with almost all other polymers. It had therefore been thought that compounding a vinylidene fluoride polymer with any other polymer was difficult with only one exception, polymethyl methacrylate (refer to Japanese Patent Publication No. 43-12012/1978). It is known that a sheet moulded from a resin composition of a vinylidene fluoride polymer mixed with a polymethyl methacrylate has excellent transparency. However, the electrical properties of the film obtained by stretching an unoriented film formed from a vinylidene fluoride polymer mixed with polymethyl methacrylate are rather inferior to those of a film of the vinylidene fluoride polymer itself. Moreover, since the surface of a film of such a

2

resin composition is smoother than that of a film of a vinylidene fluoride polymer, such a film is not used as a dielectric material.

Although the polycarbonate and the thermoplastic polyester used in a film according to the present invention are not so molecularly compatible with a vinylidene fluoride polymer as polymethyl methacrylate, they have, to a certain degree, an affinity to vinylidene fluoride polymers because of the ester linkages in their molecular chains. Accordingly, there are no fears of voids being formed when a stretched film according to the present invention is prepared. Moreover, since the polycarbonate and the thermoplastic polyester are not completely compatible with vinylidene fluoride polymers, minute particles of the polycarbonate and/or polyester are dispersed in films prepared from one or both of these polymers and a vinylidene fluoride polymer. As a result when the film is stretched, the surfaces become rough, it is presumed.

Where the vinylidene fluoride polymer is a copolymer, preferably the copolymer contains more than 50 mole% of vinylidene fluoride units. The comonomer copolymerisable with vinylidene fluoride is preferably tetrafluoroethylene, hexafluoropropylene, trifluoroethylene, trifluorochloroethylene or vinyl fluoride. In addition, the vinylidene fluoride polymer preferably has an inherent viscosity ($\eta_{inh}$) of 0.6—1.8. The inherent viscosity is derived from the following formula:

$$\eta_{inh}=\frac{1}{C}\ln\frac{\eta}{\eta_0}$$

wherein $\eta$ is a viscosity of a solution of the vinylidene fluoride polymer in dimethylformamide at a concentration of 4 kg/m$^3$ (0.4 g/dl) at a temperature of 30°C; $\eta_0$ is the viscosity of dimethylformamide at 30°C; ln is a symbol of natural logarithm and C is the concentration [4 kg/m$^3$ (0.4 g/dl)].

In cases where the value of $\eta_{inh}$ is over 1.8, the processability of the vinylidene fluoride polymer is reduced. This makes the extruding and moulding of a rough-surfaced film difficult. On the other hand, in cases where $\eta_{inh}$ is under 0.6, although the processability is favourable, the mechanical strength of the extruded film becomes weaker. This results in the frequent breakage of the film when stretched.

The thermoplastic polyester which may be one of the components of a film according to the present invention is preferably a polyester of high molecular weight. The polyester can be, for example, polymethylene terephthalate (PMT), polyethylene terephthalate (PET), polybutylene terephthalate (PBT), polyethylene naphthalate (PEN) or polyethylene isophthalate (PEI) or copolymers of the monomers making up these homopolymers, or mixtures of two or more of these polyesters.

The polycarbonate which can also be one of the components of a film according to the present invention is, in a broader sense, a polyester of carbonic acid. The polycarbonates can be obtained by polycondensation of bisphenol A and phosgene or diphenyl carbonate. In addition, the thermoplastic polyester and the polycarbonate may be copolymers with other comonomers and may be those obtained by modifying the polyester or polycarbonate. Each polyester and polycarbonate may be compounded singly with the vinylidene fluoride polymer or may be compounded as a mixture of two or more of them.

The mixing ratio by weight of the polycarbonate and/or the thermoplastic polyester to vinylidene fluoride polymer is 0.1 to (300/7):100. For example, the ratio by weight of polycarbonate and/or thermoplastic polyester to vinylidene fluoride polymer may be from 0.5:99.5 to 30:70, more preferably 1:99 to 20:80. Alternatively, the dielectric film may comprise from 0.1 to 30 parts by weight of said polycarbonate and/or said thermoplastic polyester per 100 parts by weight of vinylidene fluoride polymer, more preferably from 0.5 to 20 parts by weight of said polycarbonate and/or said thermoplastic polyester per 100 parts by weight of vinylidene fluoride polymer. When more than (300/7) parts by weight of polycarbonate and/or thermoplastic polyester are present per 100 parts by weight of vinylidene fluoride polymer, the dielectric constant is greatly reduced and the film becomes breakable during stretching. On the other hand, where less than 0.1 parts by weight of polycarbonate and/or thermoplastic polyester are present per 100 parts by weight of vinylidene fluoride polymer, no improvement in the state of the surface of the film or the electrical properties of the film can be expected.

A film according to the present invention is obtained by a two-step process, namely a first step of melt-extruding and moulding a composition of a vinylidene fluoride polymer containing 0.1 to (300/7) parts by weight of a polycarbonate and/or the thermoplastic polyester per 100 parts by weight of the vinylidene fluoride polymer to prepare an un-oriented film and a second step of stretching the thus prepared un-stretched film in at least one direction.

In one embodiment, a resin composition, prepared by admixing 0.1 to (300/7) parts by weight of the polycarbonate and/or the thermoplastic polyester with each 100 parts by weight of the vinylidene fluoride polymer, is extruded from an extruder at 200 to 310°C, preferably 220 to 280°C into a continuous sheet. Alternatively, after moulding the composition into pellets, the pellets are extruded in the same manner as above into a continuous sheet. The thus obtained sheet is stretched in at least one direction at a temperature of 120 to 180°C. The stretching is usually effected so that the area of the sheet increases by 1.5 to 50 times, preferably 2 to 30 times. Stretching can be carried out not only

3

unidirectionally, but also bi-directionally or multi-directionally. The unoriented film may be stretched simultaneously both longitudinally and transversely.

The thus obtained stretched film has a very fine rough surface texture and, as shown in the Examples, is superior to a conventional film prepared solely from a vinylidene fluoride polymer in terms of the electrical properties of the film, such as its dielectric tangent and volume resistivity, of the clouding value of the film and of the rate of impregnation of the film with insulating oil.

Although the stretched and oriented film of the invention has surfaces with a very fine rough texture and is suitable as it is for use as a layer of dielectric material for capacitors or as a part of the constituents of such a layer, one or both sides of it may be treated by superficial activation, such as by corona discharge.

In order to use the stretched film of the invention as a layer of dielectric material in a capacitor, the film is preferably wound into a coil together with electrode foils, for example aluminium foils, to form an element of the capacitor. In this case, it is preferable to use two or more of the stretched films laminated together. However, it is not always necessary to use only the stretched films as the dielectric material. For example, in a capacitor which requires three layers of dielectric material, the two layers directly contacting the electrode foils are the stretched films of the invention and the intermediate, third layer is a stretched film of a homopolymer of vinylidene fluoride or a conventional insulating paper. In addition, in a capacitor according to the present invention, a film having a metal layer deposited on its surface may be employed instead of the above-mentioned metal foil.

It is possible to prepare a capacitor by impregnating an impregnating agent, such as an insulating oil, under vacuum into the thus obtained capacitor element. In this case, since the surface of the stretched film according to the present invention has a very fine rough texture, the impregnation is favourably carried out. The impregnating agent for use in this case includes not only a mineral insulating oil obtained from fractions of petroleum, a synthetic insulating oil consisting of aromatic hydrocarbons such as alkylbenzenes, alkylnaphthalenes, diarylalkanes, diarylethanes, etc., and substances of low dielectric constant such as silicone oil and waxes but also substances of a high dielectric constant such as linseed oil, phthalic esters, phosphoric esters, fluorosilicone oils and aromatic fluoro-carbon oils. These substances may be used singly, or two or more may be employed. Further, those added with a small amount of a stabilising agent may be used.

The following Examples illustrate the present invention. In Examples 1 to 3 the dielectric constant and tangent, volume resistivity, clouding value, roughness of the film surface and rate of impregnation of insulating oil were determined as follows:

(1) Dielectric constant and dielectric tangent:
Pieces of electrodes prepared by depositing aluminum by vacuum-evaporation on both sides of a specimen of the film were used for the determination of dielectric constant and dielectric tangent, after setting in a broad-range dielectric loss tester at a temperature of 20°C and 1 KHz. In addition, the dielectric tangent (tan $\delta$) was shown by %.

(2) Volume resistivity:
The same pieces as in (1) were used as the specimen for the determination of volume resistivity, after setting in an ultra-high insulation tester at a temperature of 20°C after one minute of loading at 100 V.D.C. The value was obtained by calculation from the value of Rv.

(3) Clouding value:
It was determined following the method of Japanese Industrial Standard (JIS)-K 5714.

(4) Roughness of the surfaces of the film:
It was judged from the luster of aluminum films deposited by vacuum evaporation on the film surfaces.

(5) Rate of impregnation of insulating oil:
After laminating two films together, the laminated foils were wound in a coil around a glass rod of $5 \times 10^{-3}$ m (5 mm) in diameter and $10^{-1}$ m (100 mm) in length to form a wound coil of $2 \times 10^{-2}$ m (20 mm) in outer diameter, the width of the film being $6 \times 10^{-2}$ m (60 mm). The coil was completely impregnated in a mineral oil (Japanese Industrial Standard No. 1 oil) in a 1-litre flask under a reduced pressure of 6.66 Pa ($5 \times 10^{-2}$ Torr) for 60 min. After taking up the coil of the film, the width (L) of the un-impregnated part between the laminated two films was measured, and the rate of impregnation of insulating oil was obtained by the following formula:

$$\text{Rate of impregnation of insulating oil (\%)} = \frac{6 \times 10^{-2} - L}{6 \times 10^{-2}} \times 100 \quad (\frac{60 - L}{60} \times 100)$$

Example 1

Into a polyvinylidene fluoride of an inherent viscosity of 1.13, a polycarbonate (grade I-3000, manufactured by Idemitsu Petrochemical Co., Ltd. Japan) is compounded at a ratio shown in Table 1. The thus obtained resin composition was extruded at 260°C as a non-oriented film. The film was then stretched in a longitudinal direction at 160°C and then stretched in a transverse direction at 170°C to obtain a bi-axially stretched film $9 \times 10^{-6}$ m (9 microns). The properties of the thus prepared film are shown in Table 1.

The properties of the film prepared in the same manner solely from the same polyvinylidene fluoride as above, and the properties of the film prepared in the same manner from a resin composition of the same polyvinylidene fluoride admixed with the same polycarbonate as above are also shown in Table 1 for comparison as Comparative Examples.

TABLE 1

Properties of films of polyvinylidene fluoride

| Number | Amount of polycarbonate[1] | Dielectric constant | Dielectric tangent (%) | Volume resistivity[2] | Clouding value (%) | Roughness of surface | Rate of oil impregnation (%) |
|---|---|---|---|---|---|---|---|
| No. 1 | 0.5 | 10.4 | 1.30 | 1.8 | 25 | a little rough | 75 |
| No. 2 | 3 | 10.1 | 1.10 | 2.6 | 42 | rough | 100 |
| No. 3 | 9 | 9.0 | 0.90 | 3.3 | 56 | rough | 100 |
| No. 4 | 15 | 8.1 | 0.75 | 5.1 | 75 | rough | 100 |
| No. 5 | 20 | 7.2 | 0.60 | 3.0 | 86 | rough | 100 |
| No. 6 | 30 | 6.0 | 0.42 | 10.0 | 88 | rough | 100 |
| Comparative Example 1 | 0 | 10.8 | 1.50 | 1.1 | 4 | smooth | 20 |
| Comparative Example 2 | 40 | 4.0 | 0.35 | 25.0 | 93 | rough | 100 |

Notes: [1] parts by weight to 100 parts by weight of the resin composition.
[2] $\times 10^{13}$ ohm · m ($\times 10^{15}$ ohm · cm)

As is seen in Table 1, as the amount of polycarbonate in the resin composition increases from 0.5% by weight, the dielectric tangent and the volume resistivity of the film are improved compared with the values of these properties of the film prepared solely from the same polyvinylidene fluoride. However, when the amount of polycarbonate in the resin composition is over 30% by weight of the resin composition, the dielectric constant of the film is greatly reduced and the film became breakable when stretched.

Example 2

Into a polyvinylidene fluoride of an inherent viscosity of 1.03, a polycarbonate (trade name of Panlite 1300 W, manufactured by Teijin Kaisei Co., Ltd. Japan), a polyethylene terephthalate (PET) (trade name of RT 580C manufactured by Toyobo Co., Ltd.) or a copolymer derived from a polyester (grade of PETG 6763 manufactured by Eastman Kodak Co., Ltd., USA) was compounded at a ratio shown in Table 2. The resulting resin composition was processed to form a bi-axially stretched film in the same manner as in Example 1. The results of evaluation of the thus obtained films are shown in Table 2.

TABLE 2
Properties of films of polyvinylidene fluoride

| Number | Name and amount of added polymer | | Dielectric constant | Dielectric tangent | Volume resistivity[2] | Clouding value (%) |
|---|---|---|---|---|---|---|
| | Name | amount[1] | | | | |
| 7 | Panlite | 10 | 8.5 | 0.80 | 4.5 | 59 |
| 8 | PET RT580C | 5 | 9.5 | 0.95 | 3.1 | 51 |
| 9 | PET RT580C | 10 | 8.7 | 0.85 | 5.2 | 63 |
| 10 | PET RT580C | 15 | 8.3 | 0.80 | 6.5 | 70 |
| 11 | PETG 6763 | 5 | 9.6 | 0.96 | 2.9 | 48 |
| 12 | PETG 6763 | 10 | 8.6 | 0.87 | 4.8 | 55 |
| 13 | PETG 6763 | 15 | 8.4 | 0.82 | 5.6 | 68 |

Notes: [1] parts by weight to 100 parts by weight of the resin composition.
[2] $\times 10^{13}$ ohm · m. ($\times 10^{15}$ ohm · cm)

As is seen in Table 2, each film showed improved properties for use as a dielectric material, sufficient strongness since they have been bi-axially stretched, a rate of impregnation of insulating oil of 100%, and a fairly high value of withstanding voltage in an insulating oil.

Example 3

Into 90 parts by weight of a copolymer of vinylidene fluoride and tetrafluoroethylene containing 90 mole% of vinylidene fluoride units, 10 parts by weight of the polycarbonate (Panlite 1300W) was compounded. The thus obtained compound was processed in the same manner as in Example 1 to form a bi-axially stretched film of $2.5 \times 10^{-5}$ m (25 microns) thick. The dielectric constant, dielectric tangent, volume resistivity and clouding value of the thus obtained film were determined as follows:

Dielectric constant          9.0
Dielectric tangent (%):      0.9
Volume resistivity:          $3.5 \times 10^{13}$ ohm · m
                             ($3.5 \times 10^{15}$ ohm · cm)
Clouding value (%):          60

As can be seen from Examples 1 to 3, since films according to the present invention show noticeably improved electrical properties and the state of their surfaces is similarly improved, it will be well recognised that the films are useful as electrical insulating materials, particularly as a dielectric material for capacitors.

In Examples 4 to 6, the composite dielectric constant, insulation resistance, breakdown voltage for a short period and voltage at the inception of corona discharge are determined as follows:

(1) Composite dielectric constant $\overline{(\varepsilon)}$

Capacitance of a specimen of capacitor (after impregnation) at 20°C and 1 KHz, the electrode area of the capacitor and the thickness of the layer of dielectric material between the electrodes were measured. The composite dielectric constant of the specimen was obtained by the conventional method of calculation.

(2) Insulation resistance ($\Omega \cdot F$)

From the value of capacitance C ($\mu$F) of the specimen of capacitor at 20°C and 1 KHz, and the value of resistance of the specimen R (M$\Omega$) measured at 20°C for 2 min at 1 KV, DC, the insulation resistance was obtained by the following formula:

$$\text{Insulation resistance } (\Omega F) = C \times R$$

(3) Breakdown voltage for a short period (V, DC)

An increasing direct current voltage was applied across the two terminals of the specimen at a rate of voltage increase of about 100 V/sec. The voltage at which breakdown occurred was determined as the breakdown voltage for a short period.

(4) Voltage at the inception of corona discharge

The voltage at which partial discharge began was determined on the specimen set in a partial discharge determinating apparatus of 150 pc of sensitivity.

6

**0 039 214**

The tabulated values for the properties (1) to (4) are the mean values of 5 specimens unless otherwise specified.

Example 4

Into a homopolymer of polyvinylidene fluoride having 1.10 of inherent viscosity, a polycarbonate (Panlite, grade 1300W), manufactured by Teijin Kasei Co. Ltd., Japan) was admixed at a ratio shown in Table 1 to prepare a resin mixture. This mixture was extruded at 260°C to form pellets of a resin composition. The pellets were extruded through an extruder provided with a T-die at 260°C to form an un-oriented sheet. The sheet was successively stretched both longitudinally (2.7 times in length) and transversally (4.5 times in length) at an area ratio of 12 times to form a bi-axially oriented film of $9 \times 10^{-6}$ m (9 $\mu$) in thickness.

Then, a set of laminates was prepared by combining two of the thus formed oriented films and one aluminum foil in the order of foil/film/film, and two sets of such a laminate were further laminated in the order of (foil/film/film)$_1$/(foil/film/film)$_2$. This doubly laminated material was wound up to form a capacitor element. Alkylnaphthalene was impregnated into the thus prepared capacitor element at 80°C and under a reduced pressure of 1.33 Pa ($10^{-2}$ Torr) to prepare a capacitor at about 0.5 $\mu$F capacitance.

The composite dielectric constant, the insulation resistance, the breakdown voltage for a short period of the corona-inception voltage of the thus prepared capacitors were measured as mentioned above and are shown in Table 3.

In addition, as comparative examples, capacitors were prepared in the same manner as in Example 4, respectively using the same polyvinylidene fluoride not containing any other substance (Comparative Example 3) and using a resin composition of 100 parts by weight of the same polyvinylidene fluoride and 40 parts by weight of the same polycarbonate as in Example 4 (Comparative Example 4). The performances of these two kinds of capacitors were also shown in Table 3.

TABLE 3
Performance of capacitors in Example 4

| Number | Amount of polycarbonate[1] | Composite dielectric-constant $(\overline{\varepsilon})$ | Insulation resistance ($\Omega$ .F) | Breakdown voltage (V, DC) | Inception voltage of corona discharge (V) |
|---|---|---|---|---|---|
| Example 4 | | | | | |
| No. 1 | 0.5 | 8.8 | 1800 | 6800 | 2250 |
| No. 2 | 2 | 8.5 | 2250 | 8200 | 2500 |
| No. 3 | 5 | 8.2 | 2800 | 8500 | 2800 |
| No. 4 | 15 | 6.3 | 4500 | 8400 | 2750 |
| No. 5 | 20 | 5.0 | 7000 | 7500 | 2200 |
| Comparative Example 3 | 0 | 8.9 | 1400 | 6100 | 1800 |
| Comparative Example 4 | 40 | 3.6 | 9800 | 5800 | 1750 |

Note: [1] parts by weight of polycarbonate to 100 parts by weight of polyvinylidene fluoride.

As is seen in Table 3, in the capacitor in which an oriented film formed by moulding and stretching a resin composition containing polyvinylidene fluoride and polycarbonate in a weight ratio of 100:0.5 to 20 is used as the element, the breakdown voltage for a short period and the corona discharge-inception voltage were improved compared with the values of these properties for the capacitor employing an oriented film formed from a resin of polyvinylidene fluoride not containing the polycarbonate. As far as insulation resistance is concerned, an improvement was also observed. These facts are based on the improvement of the impregnation of the capacitor element with the impregnating agent.

However, in cases where the amount of polycarbonate was higher than 30 parts by weight per 100 parts by weight of polyvinylidene fluoride as in the capacitor of Comparative Example 4, the composite dielectric constant and the breakdown voltage for a short period of the capacitor showed reduced values as compared to the values for these properties for the capacitor prepared from the resin compositions of Example 4.

For reference, the capacitance of the capacitors prepared in Example 4 and Comparative Examples 3 and 4 are compared as follows:

The volume efficiency factor [D. A. McLean; IEEE Trans. Vol. PMP-3 No. 4 (Dec. 1967) "Dielectric Materials and Capacitor Miniaturization"] of a series of capacitors having different materials for their

7

O 039 214

dielectric layers but having the same and fixed volume, thickness of dielectric layers, and the length of wound layer and the same impregnating agent, is proportional to the composite dielectric constant $(\bar{\varepsilon})$ and also proportional to the square of the nominal highest voltage. Since the nominal highest voltage of a DC-capacitor is determined in proportion to the breakdown voltage for a short period, for example, to be about 70% of the value of breakdown voltage for a short period (V, DC), when the values of the product of $\bar{\varepsilon}$ and $V^2$, DC of the capacitors are compared, it is possible to compare their volume efficiency factors.

Accordingly, in the case where the capacitors of Nos. 1 to 5 of Example 4 and those of Comparative Examples 3 and 4 have the same volume, the relative volume efficiency factor of the capacitors are respectively obtained from the values of $\bar{\varepsilon}$ and $V^2$, DC in Table 3 as follows, wherein the volume efficiency factor of the capacitor of Comparative Example 3 is taken as 100:

122.9,        172.6,        178.9,        134.2,        84.9        and        36.5.

As can be seen from these figures, the capacitors of Example 4 have a greatly improved volume efficiency factor as compared to the conventional capacitor of Comparative Example 3.

Example 5

A resin composition was prepared by admixing 9 parts by weight of a thermoplastic polyester (Koder Copolyester PET G 6763, manufactured by Eastman Kodak Co., USA) with 100 parts by weight of polyvinylidene fluoride as in Example 4. Any other resin composition was prepared by admixing 9 parts by weight of a polycarbonate (Idemitsu Polycarbonate I-3000, manufactured by Idemitsu Petrochemical Co., Japan) with 100 parts by weight of the same polyvinylidene fluoride. Biaxially oriented films of thickness of $9 \times 10^{-6}$ m (9 $\mu$) were prepared from these compositions in the same manner as in Example 4. After preparing capacitor elements using the two thus prepared films, purified, tricresyl phosphate was impregnated into the respective capacitor elements at 80°C under a reduced pressure of 1.33 Pa ($10^{-2}$ Torr) to prepare two capacitors of about 1 $\mu$F capacitance.

The specific properties of the capacitors are shown in Table 4.

TABLE 4

| Number | Admixed polymer | Composite dielectric constant $(\bar{\varepsilon})$ | Insulation resistance ($\Omega$ .F) | Breakdown voltage (V, DC) |
|---|---|---|---|---|
| Example 5 | | | | |
| No. 1 | PET G 6763 | 8.5 | 2900 | 7250 |
| No. 2 | Polycarbonate I-3000 | 8.4 | 3150 | 7550 |

As is seen in Table 4, also in the case of using a thermoplastic polyester, a capacitor of excellent specific properties is obtained.

Example 6

Three kinds of capacitor elements were prepared by combining and winding the three layers of dielectric material with aluminum foils as electrodes in the combinations shown in Table 3. The first layer was the bi-axially oriented film prepared in Example 5, No. 2 (referred to as PC-9). The second layer was a bi-axially oriented film of polyvinylidene fluoride of $9 \times 10^{-6}$ m (9 $\mu$) in thickness (referred to as PVDF-BO). The third layer was a conventional insulating paper for capacitors of $9 \times 10^{-6}$ m (9 $\mu$) in thickness (referred to as CP). By impregnating tricresyl phosphate into the thus prepared capacitor elements at 80°C under a reduced pressure of 1.33 Pa ($10^{-2}$ Torr), capacitors were prepared. Their specific properties were measured. The combinations and the properties are shown in Table 5. The combination of PVDF-BO/CP/PVDF-BO is Comparative Example 5.

8

TABLE 5

| No. | Combination of three layers | Composite dielectric constant $(\bar{\varepsilon})$ | Insulation resistance $(\Omega \cdot F)$ | Breakdown voltage for short period (V, DC) |
|---|---|---|---|---|
| Example 6 | | | | |
| No. 1 | PC-9/PVDF-BO/PC-9 | 9.8 | 3500 | 9800 |
| No. 2 | PC-9/CP/PC-9 | 8.6 | 4000 | 11000 |
| Comparative Example 5 | PVDF-BO/CP/PVDF-BO | 9.2 | 2600 | 7600 |

As is seen in Table 5, the capacitors prepared from the three-layered dielectric material made by bringing the stretched films, formed from a resin composition containing polycarbonate admixed with polyvinylidene fluoride, into contact with an electrode, i.e. No. 1 and No. 2, showed noticeably improved electric properties as compared to the conventional capacitor prepared from the three-layered dielectric material in Comparative Example 5.

## Claims

1. A dielectric film which incorporates a vinylidene fluoride polymer and which has been stretched in at least one direction, characterised in that said film comprises from 0.1 to (300/7) parts by weight of a polycarbonate and/or a thermoplastic polyester per 100 parts by weight of vinylidene fluoride polymer.

2. A dielectric film according to claim 1, comprising from 0.1 to 30 parts by weight of said polycarbonate and/or said thermoplastic polyester per 100 parts by weight of vinylidene fluoride polymer.

3. A dielectric film according to claim 1, comprising 99.5 to 70 parts by weight of vinylidene fluoride polymer and 0.5 to 30 parts by weight of said polycarbonate and/or said thermoplastic polyester.

4. A dielectric film according to claim 2, comprising 0.5 to 20 parts by weight of said polycarbonate and/or said thermoplastic polyester per 100 parts by weight of vinylidene fluoride polymer.

5. A dielectric film according to claim 3, comprising 1 to 20 parts by weight of said polycarbonate and/or said thermoplastic polyester and 99 to 80 parts by weight of vinylidene fluoride polymer.

6. A dielectric film according to any one of the preceding claims, wherein said vinylidene fluoride polymer is a copolymer of vinylidene fluoride and at least one monomer copolymerizable with vinylidene fluoride is selected from tetrafluorethylene, hexafluoropropylene, trifluoroethylene,

7. A dielectric film according to claim 6, wherein the or each monomer copolymerizable with vinylidene fluoride is selected from tetrafluoroethylene, hexafluoropropylene, trifluoroethylene, trifluorochloroethylene and vinyl fluoride.

8. A dielectric film according to any one of the preceding claims, wherein said vinylidene fluoride polymer has an inherent viscosity of from 0.6 to 1.8.

9. A dielectric film according to any one of the preceding claims, wherein a thermoplastic polyester which is a polymethylene terephthalate, a polyethylene terephthalate, a polybutylene terephthalate, a polyethylene naphthalate, or a polyethylene isophthalate is present in said film.

10. A capacitor having one or more layers of a dielectric film which incorporates a vinylidene fluoride polymer and which has been stretched in at least one direction, characterised in that said dielectric film is a film as claimed in any one of the preceding claims.

## Patentansprüche

1. Dielektrischer Film, der ein Vinylidenfluoridpolymeres aufweist und in wenigstens einer Richtung verstreckt worden ist, dadurch gekennzeichnet, daß der Film 0,1 bis (300/7) Gew.-Teile eines Polycarbonats und/oder eines thermoplastischen Polyesters pro 100 Gew.-Teile des Vinylidenfluoridpolymeren enthält.

2. Dielektrischer Film nach Anspruch 1, dadurch gekennzeichnet, daß er 0,1 bis 30 Gew-Teile des Polycarbonats und/oder des thermoplastischen Polyesters pro 100 Gew.-Teile des Vinylidenfluoridpolymeren enthält.

3. Dielektrischer Film nach Anspruch 1, dadurch gekennzeichnet, daß er 99,5 bis 70 Gew.-Teile des Vinylidenfluoridpolymeren und 0,5 bis 30 Gew.-Teile des Polycarbonats und/oder des thermoplastischen Polyesters enthält.

4. Dielektrischer Film nach Anspruch 2, dadurch gekennzeichnet, daß er 0,5 bis 20 Gew.-Teile des Polycarbonats und/oder des thermoplastischen Polyesters pro 100 Gew.-Teile des Vinylidenfluoridpolymeren enthält.

5. Dielektrischer Film nach Anspruch 3, dadurch gekennzeichnet, daß er 1 bis 20 Gew.-Teile des Polycarbonats und/oder des thermoplastischen Polyesters sowie 99 bis 80 Gew.-Teile des Vinylidenfluoridpolymeren enthält.

6. Dielektrischer Film nach einem der vorhergehenden Ansprüche, dadurch gekennzeichnet, daß das Vinylidenfluoridpolymere ein Copolymeres aus Vinylidenfluorid und wenigstens einem Monomeren ist, das mit Vinylidenfluorid copolymerisierbar ist, und mehr als 50 Mol-% Vinylidenfluorideinheiten enthält.

7. Dielektrischer Film nach Anspruch 6, dadurch gekennzeichnet, daß das oder jedes Monomeres, das mit Vinylidenfluorid copolymerisierbar ist, aus Tetrafluorethylen, Hexafluopropylen, Trifluorethylen, Trifluorchlorethylen und Vinylfluorid ausgewählt wird.

8. Dielektrischer Film nach einem der vorhergehenden Ansprüche, dadurch gekenzeichnet, daß das Vinylidenfluoridpolymere eine logarithmische Viskositätszahl (inherent viscosity) von 0,6 bis 1.8 besitzt.

9. Dielektrischer Film nach einem der vorhergehenden Ansprüche, dadurch gekennzeichnet, daß ein thermoplastischer Polyester, bei dem es sich um ein Polymethylenterephthalat, ein Polyethylenterephthalat, ein Polybutylenterephthalat, ein Polyethylennaphthalat oder Polyethylenisophthalat handelt, in dem Film vorliegt.

10. Kondensator mit einer oder mehreren Schichten aus einem dielektrischen Film, der ein Vinylidenfluoridpolymeres aufweist und in wenigstens einer Richtung verstreckt worden ist, dadurch gekennzeichnet, daß der dielektrische Film ein Film gemäß einem der vorhergehenden Ansprüche ist.

**Revendications**

1. Un film diélectrique qui contient un polymère de fluorure de vinylidène et qui a été étiré au moins dans une direction, caractérisé en ce que ledit film comprend de 0,1 à (300/7) parties en poids d'un polycarbonate et/ou d'un polyester thermoplastique pour 100 parties en poids de polymère de fluorure de vinylidène.

2. Un film diélectrique selon la revendication 1, comprenant 0,1 à 30 parties en poids dudit polycarbonate et/ou dudit polyester thermoplastique pour 100 parties en poids de polymère de fluorure de vinylidène.

3. Un film diélectrique selon la revendication 1, comprenant 99,5 à 70 parties en poids de polymère de fluorure de vinylidène et 0,5 à 30 parties en poids dudit polycarbonate et/ou dudit polyester thermoplastique.

4. Un film diélectrique selon la revendication 2, comprenant 0,5 à 20 parties en poids dudit polycarbonate et/ou dudit polyester thermoplastique pour 100 parties en poids de polymère de fluorure de vinylidène.

5. Un film diélectrique selon la revendication 3, comprenant 1 à 20 parties en poids dudit polycarbonate et/ou dudit polyester thermoplastique et 99 à 80 parties en poids de polymère de fluorure de vinylidène.

6. Un film diélectrique selon l'une quelconque des revendications précédentes, dans lequel ledit polymère de fluorure de vinylidène est un copolymère de fluorure de vinylidène et d'au moins un monomère copolymérisable avec le fluorure de vinylidène, contenant plus de 50 mol % de motifs de fluorure de vinylidène.

7. Un film diélectrique selon la revendication 6, dans lequel le ou chaque monomère copolymérisable avec le fluorure de vinylidène est choisi parmi le tétrafluoroéthylène, l'hexafluoropropylène, le trifluoroéthylène, le trifluorochloroéthylène et le fluorure de vinyle.

8. Un film diélectrique selon l'une quelconque des revendications précédentes, dans lequel ledit polymère de fluorure de vinylidène a une viscosité inhérente de 0,6 à 1,8.

9. Un film diélectrique selon l'une quelconque des revendications précédentes, dans lequel un polyester thermoplastique qui est un téréphtalate de polyméthylène, un téréphtalate, de polyéthylène, un téréphtalate de polybutylène, un naphtalate de polyéthylène ou un isophtalate de polyéthylène est présent dans ledit film.

10. Un condensateur ayant une ou plusieurs couches faites d'un film diélectrique qui comprend un polymère de fluorure de vinylidène et qui a été étiré au moins dans une direction, caractérisé en ce que ledit film diélectrique est un film comme revendiqué dans l'une quelconque des revendications précédentes.